# EUROPEAN PATENT APPLICATION

(11) **EP 4 075 042 A1**
(43) Date of publication of application: **19.10.2022**
(21) Application number: 21192456.8
(22) Date of filing: 20.08.2021
(51) Int. Cl.: F16L 27/08, F16L 27/093, F16L 37/088, B60G 15/12, B62K 25/28

(54) **UNIVERSAL TUBE ADAPTOR AND SHOCK ABSORBER INCLUDING THE SAME**

(30) Priority: 12.04.2021 TW 110113129
(71) Applicant: Liao, Chih-Hsien, Taichung City 40755 (TW)
(72) Inventor: Liao, Chih-Hsien, Taichung City 40755 (TW)
(74) Representative: Sackin, Robert

(57) **Abstract**

A universal tube adaptor for a shock absorber includes a connector body (3), and first (4) and second (6) connectors. The connector body has intersecting first (33) and second (34) connecting holes respectively and rotatably receiving the first and second connectors rotatably therein. The first connector has a first guiding hole (45) and an overflow hole (46) perpendicular to, in fluid communication with, and cooperating with the first guiding hole to define an oil-filled space (30) in fluid communication with the second connecting hole. The second connector has a second guiding hole (64) in fluid communication with the second connecting hole and the overflow hole, so that the second guiding hole, the oil-filled space and the first guiding hole cooperate with one another to define an oil passage (F) permitting damping oil to flow therein.

## Description

The disclosure relates to a tube adaptor, more particularly to a universal tube adapter and a shock absorber including the same.

A conventional shock absorber is connected between a vehicle body and a vehicle axle of a vehicle, and is able to absorb shock by a damping action of a spring to convert a vibration of the vehicle into heat, so as to absorb vibration of the vehicle during advance or impact generated from braking of the vehicle. Thus, the conventional shock absorbers are widely used in various vehicles.

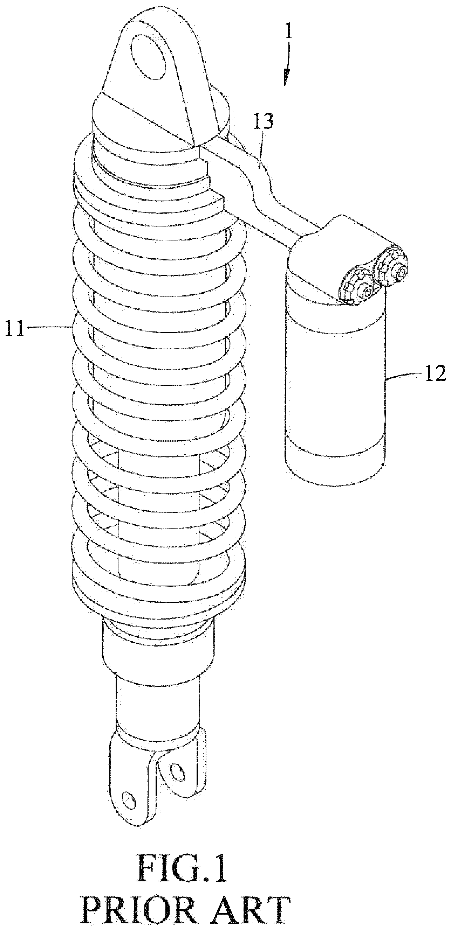

Referring to FIG. 1, a conventional shock absorber 1 of a motorcycle includes a shock absorber main body 11, a reservoir 12 and a connector 13. The main body 11 permits damping oil to flow therein. The reservoir 12 is filled with nitrogen gas. The connector 13 interconnects the main body 11 and the reservoir 12 and conveys the damping oil between the main body 11 and the reservoir 12.

The damping oil flows between the main body 11 and the reservoir 12 to compress the nitrogen gas so as to generate the damping action. Since available spaces and positions for mounting of the conventional shock absorbers of different vehicles are different, and since the reservoir 12 is fixedly connected to the shock absorber main body 11 and is unable to be detached, the consumer cannot arbitrarily select a model of reservoir that they prefer, e.g., a reservoir having an attractive shape or color, or a relatively large capacity. Further, the reservoir cannot be mounted to a prominent position on the vehicle.

Therefore, an object of the disclosure is to provide a shock absorber including a universal tube adaptor.

According to an aspect of the disclosure, a universal tube adaptor for a shock absorber is provided. The shock absorber includes a shock absorber main body and a reservoir. The universal tube adaptor is adapted to interconnect the reservoir and the shock absorber main body and permits damping oil to flow thereamong. The universal adaptor includes a connector body, a first connector, two sealing rings, and a second connector. The connector body is formed with a first connecting hole extending along a first axis, and a second connecting hole extending along a second axis perpendicular to the first axis and in fluid communication with the first connecting hole. The first connecting hole includes a large diameter section and two small diameter sections. Each of the small diameter sections has a diameter smaller than that of the large diameter section. The small diameter sections are connected respectively to two opposite ends of the large diameter section along the first axis. The second connecting hole includes an interior section in spatial communication with the large diameter section, and an exterior section opposite to the interior section along the second axis.

The first connector extends into the first connecting hole of the connector body and is rotatable about the first axis. The first connector is formed with a first guiding hole extending along the first axis, and an overflow hole perpendicular to the first guiding hole and in fluid communication with the first guiding hole. The first guiding hole has an open end, and a close end that is adjacent to the overflow hole. The overflow hole has two hole openings disposed opposite to each other along the second axis and in fluid communication with the large diameter section of the first connecting hole. The sealing rings are sleeved on the first connector and correspond in position to the small diameter sections, respectively. Each of the sealing rings is clamped between the first connector and a wall of the connector body defining a respective one of the small diameter sections. The large diameter section cooperates with the overflow hole to define an oil-filled space in fluid communication with the first guiding hole and the second connecting hole. The second connector extends into the second connecting hole of the connector body, is rotatable about the second axis, and includes a connector-body connecting segment disposed in the second connecting hole, and a tube-connecting segment opposite to the connector-body connecting segment along the second axis. The second connector is formed with a second guiding hole extending along the second axis. The second guiding hole extends through the tube-connecting segment and the connector-body connecting segment and is in fluid communication with the second connecting hole and the hole openings of the overflow hole, so that the second guiding hole, the oil-filled space and the first guiding hole cooperate with one another to define an oil passage permitting the damping oil to flow therein.

According to another aspect of the present disclosure, a shock absorber includes a shock absorber main body, a reservoir and a tube unit. The shock absorber main body is adapted to permit damping oil to flow therein. The reservoir is adapted to accommodate compressible gas therein. The tube unit interconnects the shock absorber main body and the reservoir. The tube unit includes an oil tube for conveying the damping oil between the shock absorber main body and the reservoir, and at least one universal tube adaptor interconnecting an end of the oil tube and one of the reservoir and the shock absorber main body and permitting the damping oil to flow thereamong.

The universal tube adaptor includes a connector body, a fist connector, two sealing rings, and a second connector. The connector body is formed with a first connecting hole extending along a first axis, and a second connecting hole 34 extending along a second axis perpendicular to the first axis and in fluid communication with the first connecting hole. The first connecting hole includes a large diameter section and two small diameter sections. Each of the small diameter sections has a diameter smaller than that of the large diameter section. The small diameter sections are connected respectively to two opposite ends of the large diameter section along the first axis. The second connecting hole includes an interior section in spatial communication with the large diameter section, and an exterior section opposite to the interior section along the second axis. The first connector extends into the first connecting hole of the connector body and is rotatable about the first axis. The first connector is formed with a first guiding hole extending along the first axis, and an overflow hole perpendicular to the first guiding hole and in fluid communication with the first guiding hole. The first guiding hole has an open end that is in fluid communication with the one of the shock absorber main body and the reservoir, and a close end that is adjacent to the overflow hole. The overflow hole has two hole openings disposed opposite to each other along the second axis and in fluid communication with the large diameter section of the first connecting hole. The sealing rings are sleeved on the first connector and corresponding in position to the small diameter sections, respectively. Each of the sealing rings is clamped between the first connector and a wall of the connector body defining a respective one of the small diameter sections. The large diameter section cooperates with the overflow hole to define an oil-filled space in fluid communication with the first guiding hole and the second connecting hole. The second connector extends into the second connecting hole of the connector body, is rotatable about the second axis, and includes a connector-body connecting segment disposed in the second connecting hole, and a tube-connecting segment opposite to the connecting segment along the second axis. The second connector is formed with a second guiding hole extending along the second axis and in spatial communication with the end of the oil tube. The second guiding hole extends through the tube-connecting segment and the connector-body connecting segment and is in fluid communication with the second connecting hole and the hole openings of the overflow hole, so that the second guiding hole, the oil-filled space and the first guiding hole cooperate with one another to define an oil passage permitting the damping oil to flow therein. The oil passage is in fluid communication with the oil tube and the shock absorber main body to permit the damping oil to flow therebetween and to compress the compressible gas in the reservoir when the damping oil flows into the reservoir.

Other features and advantages of the disclosure will become apparent in the following detailed description of the embodiment with reference to the accompanying drawings, of which:
FIG.1 is a schematic perspective view of a conventional motorcycle shock absorber;
FIG.2 is a schematic perspective view of an embodiment of a universal tube adaptor according to the present disclosure;
FIG.3 is an exploded perspective view of the embodiment;
FIG.4 is a schematic sectional view of the embodiment;
FIG.5 is a schematic exploded sectional view of the embodiment;
FIG.6 is a schematic sectional view taken along line VI-VI in FIG.4, illustrating the flow paths of damping oil flowing in the embodiment;
FIG.7 is similar to FIG.6 but illustrating that a first connector is rotated relative to a connector body of the embodiment; and
FIG.8 is a schematic view of a shock absorber including two universal tube adaptors, each of which has the structure shown in FIG. 2.

Before the present disclosure is described in greater detail, it should be noted herein that like elements are denoted by the same reference numerals throughout the disclosure.

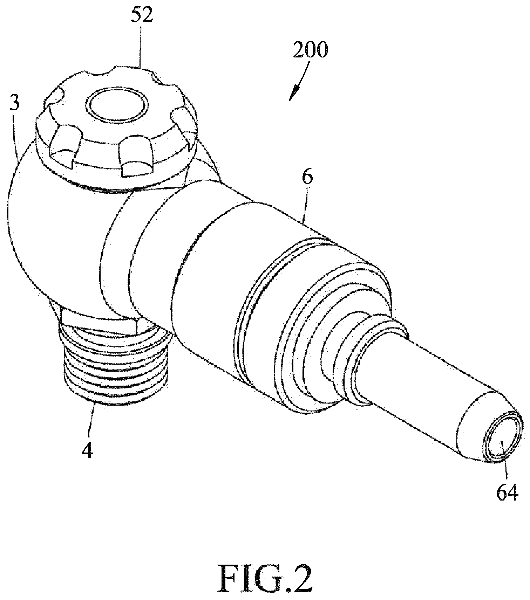

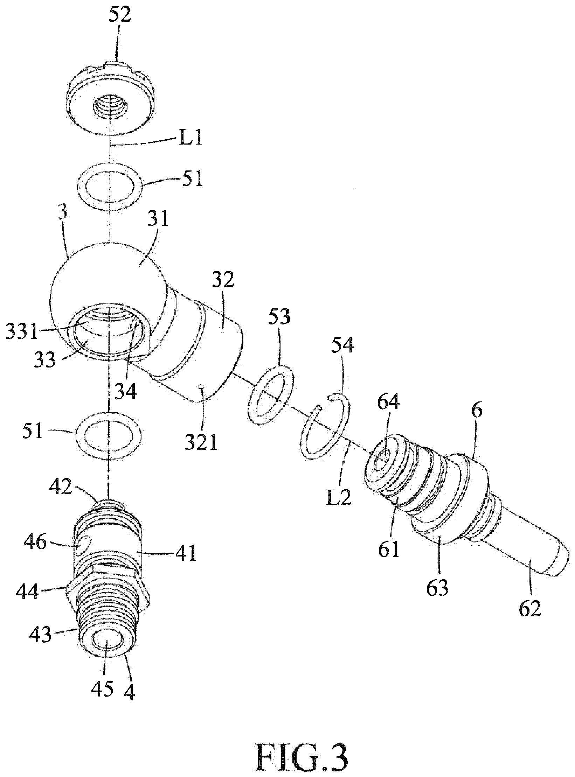

Referring to FIGS. 2 and 3, an embodiment of a universal tube adaptor 200 according to the present disclosure includes a connector body 3, a first connector 4, two sealing rings 51, a fastening member 52, a second connector 6, an O-ring 53, and a C-shaped retaining ring 54.

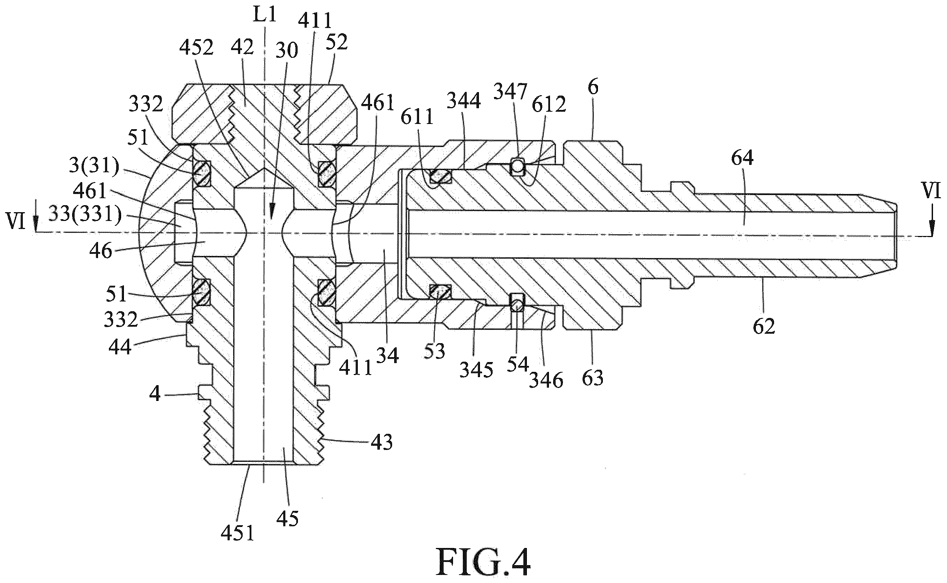

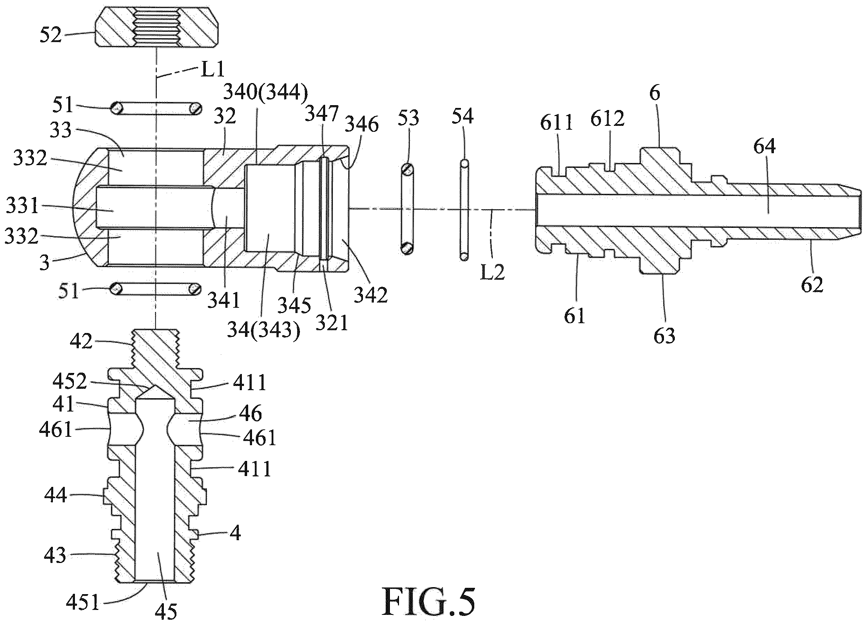

Further referring to FIGS. 4 and 5, the connector body 3 includes a head portion 31 that is generally spherical, and a barrel portion 32 that is connected to the head portion 31 and that is generally cylindrical. The head portion 31 is formed with a first connecting hole 33 extending along a first axis (L1). The barrel portion 32 is formed with a second connecting hole 34 extending along a second axis (L2) perpendicular to the first axis (L1) and in fluid communication with the first connecting hole 33.

The first connecting hole 33 includes a large diameter section 331 and two small diameter sections 332 having a diameter smaller than that of the large diameter section 331. The small diameter sections 332 are connected respectively to two opposite ends of the large diameter section 331 along the first axis (L1). The second connecting hole 34 is perpendicular to the first connecting hole 33 and includes an interior section 341 in spatial communication with the large diameter section 331, an exterior section 342 opposite to the interior section 341 along the second axis (L2), and an intermediate section 343 connected between the interior section 341 and the exterior section 342. The interior section 341 has a diameter substantially the same as a dimension of the large diameter section 331 of the first connecting hole 33 along the first axis (L1). The intermediate section 343 has a diameter larger than that of the interior section 341.

The connector body 3 has an inner surface 340 defining the second connecting hole 34. The inner surface 340 has an O-ring abutment segment 344 disposed in the intermediate section 343, an inclined segment 345 disposed at the intermediate section 343 and diverging gradually from the O-ring abutment segment 344 toward the exterior section 342, and a guiding segment 346 disposed at the exterior section 342. Specifically, the inclined segment 345 converges gradually from the exterior section 342 toward the interior section 341, and the guiding segment 346 converges gradually from the exterior section 342 toward the interior section 341 for guiding the second connector 6 to move into the connector body 3 during assembly of the second connector 6 to the connector body 3.

The inner surface 340 is formed with an annular retainer groove 347 located between the inclined segment 345 and the guiding segment 346.

The first connector 4 extends into the first connecting hole 33 of the connector body 3 and is rotatable about the first axis (L1). That is to say, the first connector 4 is rotatable by 360 degrees relative to the connector body 3 about the first axis (L1).

The first connector 4 includes an insertion section 41 received in the first connecting hole 33, a fixing segment 42 extending outwardly from the first connecting hole 33, a mounting segment 43 opposite to the fixing segment 42 along the first axis (L1), and a stop segment 44 disposed between the insertion section 41 and the mounting segment 43. The insertion section 41 is formed with two sealing grooves 411 spaced apart from each other along the first axis (L1) and corresponding in position to the small diameter sections 332 of the connector body 3, respectively. Each of the fixing segments 42 and the mounting segment 43 is formed with an external thread. The stop segment 44 has an outer diameter larger than those of the insertion segment 41 and the mounting segment 43, and abuts against the head portion 31 of the connector body 3.

In one embodiment, the outer periphery of the stop segment 44 is generally hexagonal, and the stop segment 44 covers one of the small diameter sections 332 of the first connecting hole 33 distal from the fixing segment 42.

The first connector 4 is further formed with a first guiding hole 45 extending along the first axis (L1) and an overflow hole 46 extending along the second axis (L2). The overflow hole 46 is perpendicular to the first guiding hole 45 and is in fluid communication with the first guiding hole 45. The first guiding hole 45 has an open end 451 formed at the mounting segment 43, and a close end 452 adjacent to the overflow hole 46. The close end 452 is formed in the insertion section 41. The overflow hole 46 is formed in the insertion section 41 and is adjacent to the close end 452. The overflow hole 46 has two hole openings 461 disposed opposite to each other along the second axis (L2) and in fluid communication with the large diameter section 331 of the first connecting hole 33. Each hole opening 461 has a dimension along the first axis (L1) smaller than that of the large diameter section 331.

The sealing rings 51 are sleeved on the first connector 4 and correspond respectively in position to the small diameter sections 332. Each of the sealing rings 51 is clamped between a wall of the insertion segment 41 defining a respective one of the sealing grooves 411 and a wall of the connector body 3 defining a respective one of the small diameter sections 332. In some embodiments, each of the sealing rings 51 is an O-ring made of rubber.

Referring to FIGS. 4 to 7, the large diameter section 331 of the first connecting hole 33 cooperates with the overflow hole 46 to define an oil-filled spaces 30 in fluid communication with the first guiding hole 45 and the second connecting hole 34. By virtue of the disposition of the sealing rings 51, a fluid-tight seal is formed between the first connector 4 and the connector body 3.

The fastening member 52 is for securing threadedly the fixing segment 42 of the first connector 4 to the connector body 3 and abuts against the head portion 31 of the connector body 3. The stop segment 44 of the first connector 4 cooperates with the fastening member 52 to clamp the head portion 31 of the connector body 3 therebetween so as to connect the first connector 4 fixedly to the connector body 3.

As shown in FIGS. 3 to 5, the second connector 6 extends into the connector body 3 along the second axis (L2) and is rotatable about the second axis (L2). The second connector 6 includes a connector-body connecting segment 61 disposed in the second connecting hole 34, a tube-connecting segment 62 opposite to the connector-body connecting segment 61 along the second axis (L2), and a protruding flange 63 disposed between the connector-body connecting segment 61 and the tube-connecting segment 62.

The connector-body connecting segment 61 is formed with an annular sealing groove 611 corresponding in position to the O-ring abutment segment 344 of the inner surface 340 connector body 3, and an annular retainer groove 612 spaced apart from the sealing groove 611 along the second axis (L2) and corresponding in position to the retainer groove 347 formed in the inner surface 340 of the connector body 3. The retainer groove 612 is closer to the exterior section 342 than the sealing groove 611.

The protruding flange 63 has an outer diameter larger than that of the tube-connecting segment 62 and is disposed outside the barrel portion 32 of the connector body 3. In some embodiments, as shown in FIG. 4, there is gap between the protruding flange 63 and the barrel portion 32 of the connector body 3, thus facilitating smooth rotations of the connector body 3 about the first axis (L1) and the second connector 6 about the second axis (L2) during use.

The second connector 6 is formed with a second guiding hole 64 extending along the second axis (L2). The second guiding hole 64 extends through the tube-connecting segment 62 and the connector-body connecting segment 61 and is in fluid communication with the second connecting hole 34 and the hole openings 461 of the overflow hole 46.

The O-ring 53 is disposed in the sealing groove 611 and clamped between the O-ring abutment segment 344 of the inner surface 340 defining the second connecting hole 34 and a wall defining the sealing groove 611, so that the second connector 6 extends into the second connecting hole 34 in a fluid tight manner.

The C-shaped retaining ring 54 is disposed in the retainer groove 612 and the retainer groove 347 of the connector body 3 so as to prevent relative movement between the second connector 6 and the connector body 3. The retaining ring 54 has a circular cross-section in this embodiment and may be other types of retaining rings in other embodiments.

As such, since the outer diameter of the O-ring 53 is smaller than that of the retaining ring 54 and the retaining ring 54 is disposed closer to the exterior section 342 than the O-ring 53, a fluid tight seal is formed between the second connector 6 and the connector body 3.

Furthermore, because the O-ring 53 is disposed closer to the interior section 341 than the retaining ring 54, even if the retaining ring 54 generates scratches on the inner surface 340 during assembly of the retaining ring 54 to the connector body 3, the fluid-tight seal formed between the second connector 6 and the second connecting hole 34 would not be affected. Thus, a risk of oil leak can be reduced.

It should be noted that, during assembly of the second connector 6 to the connector body 3, the O-ring 53 and the retaining ring 54 are first sleeved on the connector-body connecting segment 61, and then the second connector 6 is inserted into the second connecting hole 34 of the connector body 3 such that the O-ring 53 and the retaining ring 54 are disposed in the sealing groove 611 and the retainer groove 612, respectively.

By virtue of the design of the inclined segment 345 and the guiding segment 346, the second connector 6 is guided to move smoothly into the connector body 3 such that the O-ring 53 can be smoothly guided into the O-ring abutment segment 344 and that the retaining ring 54 can be smoothly guided into the retainer groove 347.

Further, in this embodiment, the barrel portion 32 is formed with an inspection hole 321 in spatial communication with the ambient surroundings and the retainer groove 347. An assembler can check whether the retaining ring 54 is properly engaged with the retainer groove 347 through the inspection hole 321.

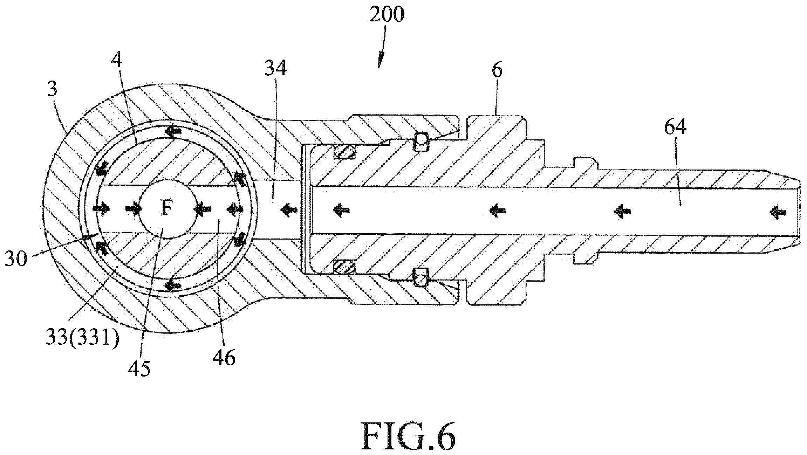

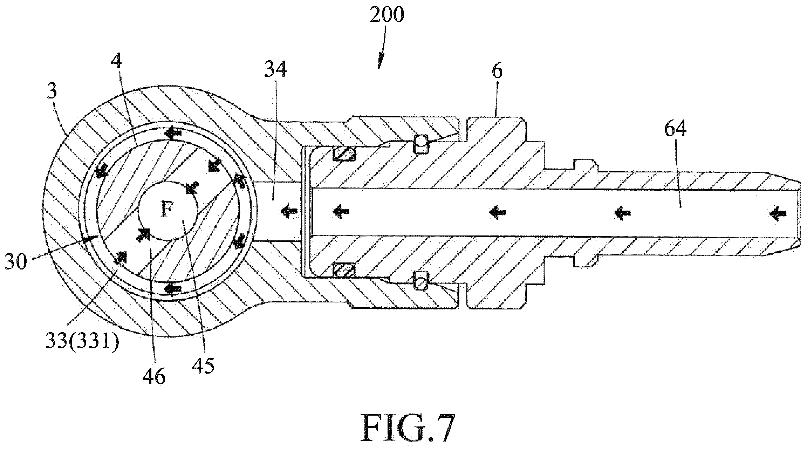

As shown in FIG. 4 and 6, the second guiding hole 64, the second connecting hole 34, the oil-filled space 30, and the first guiding hole 45 cooperate with one another to define an oil passage (F) permitting the damping oil to flow therein. The arrows shown in FIGS. 6 and 7 represent the flow paths of the damping oil in the oil passage (F) . Specifically, the damping oil can flow from the first guiding hole 45 to the second guiding hole 64, and vice versa.

Referring to FIGS. 4, 6 and 7, in the universal tube adaptor 200 of the present disclosure, through the configuration of the large diameter section 331, the oil-filled space 30 is defined by cooperation of the large diameter section 331 and the overflow hole 46. Since the first guiding hole 45 is in fluid communication with the second connecting hole 34 through the oil-filled space 30, the oil passage (F) always permits the damping oil to flow therein when the first connector 4 rotates relative to the connector body 3 about the first axis (L1).

Additionally, the second connector 6 can also be rotated relative to the connector body 3 about the second axis (L2), so that the universal tube adaptor 200 of the present disclosure has an advantage of being able to rotate universally and is easy to assemble. In addition, in this embodiment, the large diameter section 331 has a dimension along the first axis (L1) larger than a dimension of each of the hole openings 461 so as to permit the damping oil to flow smoothly in the oil passage (F).

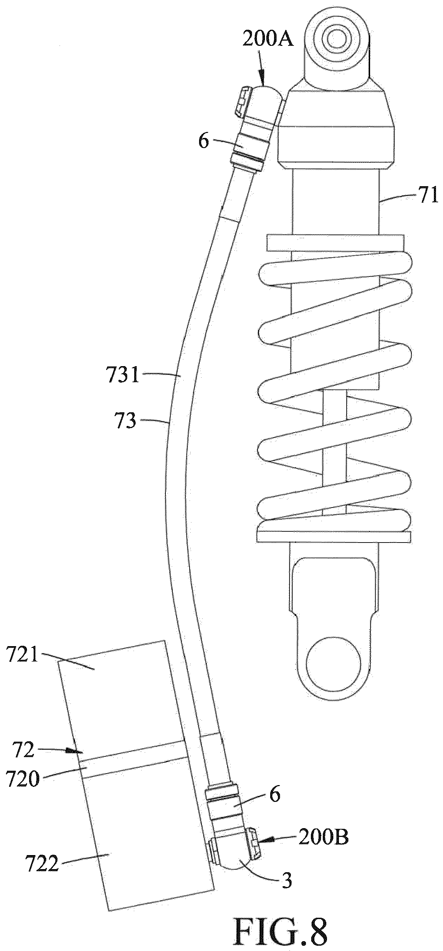

Referring to FIG. 8, two universal tube adaptors 200A, 200B each having the structure shown in FIG. 2 can be provided in a shock absorber. The shock absorber is a vehicle shock absorber, and includes a shock absorber main body 71, a reservoir 72, and a tube unit 73. The shock absorber main body 71 is adapted to permit damping oil (not shown) to flow therein. The reservoir 72 includes a piston valve 720 dividing an inner space of the reservoir 72 into a gas chamber 721 adapted for containing compressible gas, e.g., nitrogen gas, therein and a fluid chamber 722 containing the damping oil. Since the shock absorber main body 71 and the reservoir 72 are well known in the art, further details of the same are not described herein.

The tube unit 73 interconnects the shock absorber main body 71 and the reservoir 72, and includes an oil tube 731 for conveying the damping oil between the shock absorber main body 71 and the reservoir 72. The universal tube adaptor 200A is mounted to one end of the oil pipe 731 and connected to the shock absorber main body 71, while the universal tube adaptor 200B is mounted to the other end of the oil tube 731 and connected to the reservoir 72. The oil passages (F) of the universal tube adaptors 200A, 200B are in fluid communication with the fluid chamber 722, the oil tube 731, and the shock absorber main body 711 to permit the damping oil to flow thereamong and push the piston valve 720 to compress the nitrogen gas in the gas chamber 721 to absorb shock.

By virtue of disposition of the universal tube adaptors 200A, 200B, the oil tube 731 can be rotated relative to the shock absorber main body 71, and the reservoir 72 can also be rotated relative to the oil tube 731. Thus, the reservoir 72 can be arbitrarily mounted to any position on a vehicle (not shown). In a variation example, an outer surface of the tube-connecting segment 62 of each of the universal tube adaptors 200A, 200B is formed with a plurality annular ridges (not shown) spaced apart from one another along the second axis (L2). The opposite ends of the oil tube 731 are sleeved respectively on the tube-connecting segments 62 and engage the annular ridges of the respective tube-connecting segments 62 so as to increase connection strength thereamong.

In one embodiment, since it is required to mount the shock absorber main body 71 between a wheel (not shown) and a seat (not shown) of the vehicle, the tube unit 73 may include only the universal tube movable adaptor 200B. That is to say, the universal tube adaptor 200B is mounted between the oil tube 731 and the reservoir 72, and an existing adaptor available on the market is mounted between the oil tube 731 and the shock absorber main body 71. In this embodiment, through the use of the universal tube adaptor 200B, the reservoir 72 may still be mounted to an arbitrary position on the vehicle.

By virtue of the design of the universal tube adaptors 200, 200A, 200B of the present disclosure, a distance and a relative position between the reservoir 72 and the shock absorber main body 71 are not limited. That is to say, the shock absorber main body 71 and the reservoir 72 may be independently and arbitrarily mounted to any position on vehicles of different models.

Additionally, explosion of the oil tube 731 caused by bending and folding of the oil tube 731 may be avoided, which is advantageous to improve safety of the vehicle. Furthermore, since the oil tube 731 is mounted between the shock absorber main body 71 and the reservoir 72, a space for accommodating the damping oil is relatively large. Thus, a temperature of the damping oil would not be rapidly increased when flowing between the reservoir 72 and shock absorber main body 71, and a probability of explosion of the oil tube 731 can also be reduced.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A universal tube adaptor for a shock absorber, the shock absorber including a shock absorber main body (71) and a reservoir (72), said universal tube adaptor being adapted to interconnect the reservoir (72) and the shock absorber main body (71) and permit damping oil to flow thereamong, said universal adaptor **characterized by**:
a connector body (3) formed with a first connecting hole (33) extending along a first axis (L1), and a second connecting hole (34) extending along a second axis (L2) perpendicular to the first axis (L1) and in fluid communication with said first connecting hole (33), said first connecting hole (33) including a large diameter section (331) and two small diameter sections (332) each having a diameter smaller than that of said large diameter section (331), said small diameter sections (332) being connected respectively to two opposite ends of said large diameter section (331) along the first axis (L1), said second connecting hole (34) including an interior section (341) in spatial communication with said large diameter section (331), and an exterior section (342) opposite to said interior section (341) along the second axis (L2);
a first connector (4) extending into said first connecting hole (33) of said connector body (3) and rotatable about said first axis (L1), said first connector (4) being formed with a first guiding hole (45) extending along the first axis (L1), and an overflow hole (46) perpendicular to said first guiding hole (45) and in fluid communication with said first guiding hole (45), said first guiding hole (45) having an open end (451), and a close end (452) that is adjacent to said overflow hole (46), said overflow hole (46) having two hole openings (461) disposed opposite to each other along the second axis (L2) and in fluid communication with said large diameter section (331) of said first connecting hole (33) ;
two sealing rings (51) sleeved on said first connector (4) and corresponding in position to said small diameter sections (332), respectively, each of said sealing rings (51) being clamped between said first connector (4) and a wall of said connector body (3) defining a respective one of said small diameter sections (332), said large diameter section (331) cooperating with said overflow hole (46) to define an oil-filled space (30) in fluid communication with said first guiding hole (45) and said second connecting hole (34); and
a second connector (6) extending into said second connecting hole (34) of said connector body (3), rotatable about the second axis (L2), and including a connector-body connecting segment (61) disposed in said second connecting hole (34), and a tube-connecting segment (62) opposite to said connector-body connecting segment (61) along the second axis (L2), said second connector (6) being formed with a second guiding hole (64) extending along the second axis (L2), said second guiding hole (64) extending through said tube-connecting segment (62) and said connector-body connecting segment (61) and being in fluid communication with said second connecting hole (34) and said hole openings (461) of said overflow hole (46), so that said second guiding hole (64), said oil-filled space (30) and said first guiding hole (45) cooperate with one another to define an oil passage (F) permitting the damping oil to flow therein.

2. The universal tube adaptor as claimed in Claim 1, **characterized in that** said second connecting hole (34) further includes an intermediate section (343) connected between said interior section (341) and said exterior section (342) and having a diameter larger than that of said interior section (341), said connector-body connecting segment (61) of said second connector (6) being disposed in said intermediate section (343) and said exterior section (342) of said second connecting hole (34).

3. The universal tube adaptor as claimed in Claim 1 or 2, **characterized in that** said exterior section (342) of said second connecting hole (34) of said connector body (3) converges gradually toward said interior section (341) for guiding said second connector (6) to move into said connector body (3) during assembly of said second connector (6) to said connector body (3).

4. The universal tube adaptor as claimed in any one of Claims 1 to 3, **characterized in that** said connector-body connecting segment (61) of said second connector (6) is formed with an annular sealing groove (611) and an annular retainer groove (612) spaced apart from said sealing groove (611) along the second axis (L2), said connector body (3) having an inner surface (340) defining said second connecting hole (34) and formed with an annular retainer groove (347), said universal tube adaptor further comprising:
an O-ring (53) disposed in said sealing groove (611) and clamped between said connector-body connecting segment (61) of said second connector (6) and said connector body (3), so as to interconnect said second connector (6) and said connector body (3) in a fluid-tight manner; and
a C-shaped retaining ring (54) disposed in said retainer groove (612) of said connector-body connecting segment (61) of said second connector (6) and said retainer groove (347) of the connector body (3), so as to prevent relative movement between said second connector (6) and said connector body (3).

5. The universal tube adaptor as claimed in Claim 4, **characterized in that** said retainer groove (612) is closer to said exterior section (342) than said sealing groove (611) along the second axis (L2).

6. The universal tube adaptor as claimed in any one of Claims 1 to 5, **characterized in that** said first connector (4) includes an insertion segment (41) being received in said first connecting hole (33), a fixing segment (42) extending outwardly from said first connecting hole (33), and a mounting segment (43) opposite to said fixing segment (42) along the first axis (L1), said open end (451) of said first guiding hole (45) being formed in said mounting segment (43), said overflow hole (46) being formed in said insertion segment (41), said universal tube adaptor further comprising a fastening member (52) for securing said fixing segment (42) of said first connector (4) to said connector body (3).

7. The universal tube adaptor as claimed in Claim 6, **characterized in that** said insertion segment (41) is formed with two sealing grooves (411) respectively accommodating said sealing rings (51) therein.

8. The universal tube adaptor as claimed in Claim 6 or 7, **characterized in that** said large diameter section (331) of said first connecting hole (33) is larger in dimension along the first axis (L1) than a dimension of each of said hole openings (461) of said overflow hole (46) so as to permit the damping oil to flow smoothly in said oil passage (F), said first connector (4) further including a stop segment (44) that is disposed between said insertion segment (41) and said mounting segment (43), that has an outer diameter larger than those of said insertion segment (41) and said mounting segment (43), and that abuts against said connector body (3), said stop segment (44) cooperating with said fastening member (52) to clamp said connector body (3) therebetween so as to connect said first connector (4) fixedly to said connector body (3).

9. The universal tube adaptor as claimed in any one of Claims 1 to 8, **characterized in that** said second connector further includes a protruding flange (63) disposed between said connector-body connecting segment (61) and said tube-connecting segment (62) of said second connector (6), and having an outer diameter larger than that of said tube-connecting segment (62).

10. A shock absorber including:
a shock absorber main body (71) adapted to permit damping oil to flow therein;
a reservoir (72) adapted to accommodate compressible gas therein; and
a tube unit (73) interconnecting said shock absorber main body (71) and said reservoir (72), and including an oil tube (731) for conveying the damping oil between said shock absorber main body (71) and said reservoir (72), and at least one universal tube adaptor interconnecting an end of said oil tube (731) and one of said reservoir (72) and said shock absorber main body (71) and permitting damping oil to flow thereamong, said shock absorber **characterized by** said universal tube adaptor including,
a connector body (3) formed with a first connecting hole (33) extending along a first axis, and a second connecting hole (34) extending along a second axis (L2) perpendicular to the first axis (L1) and in fluid communication with said first connecting hole (33), said first connecting hole (33) including a large diameter section (331) and two small diameter sections (332) each having a diameter smaller than that of said large diameter section (331), said small diameter sections (332) being connected respectively to two opposite ends of said large diameter section (331) along the first axis (L1), said second connecting hole (34) including an interior section (341) in spatial communication with said large diameter section (331), and an exterior section (342) opposite to said interior section (341) along the second axis (L2),
a first connector (4) extending into said first connecting hole (33) of said connector body (3) and rotatable about said first axis (L1), said first connector (4) being formed with a first guiding hole (45) extending along the first axis (L1), and an overflow hole (46) perpendicular to said first guiding hole (45) and in fluid communication with said first guiding hole (45), said first guiding hole (45) having an open end (451) that is in fluid communication with the one of said shock absorber main body (71) and said reservoir (72), and a close end (452) that is adjacent to said overflow hole (46), said overflow hole (46) having two hole openings (461) disposed opposite to each other along the second axis (L2) and in fluid communication with said large diameter section (331) of said first connecting hole (33),
two sealing rings (51) sleeved on said first connector (4) and corresponding in position to said small diameter sections (332), respectively, each of said sealing rings (51) being clamped between said first connector (4) and a wall of said connector body (3) defining a respective one of said small diameter sections (332), said large diameter section (331) cooperating with said overflow hole (46) to define an oil-filled space (30) in fluid communication with said first guiding hole (45) and said second connecting hole (34), and
a second connector (6) extending into said second connecting hole (34) of said connector body (3), rotatable about the second axis (L2), and including a connector-body connecting segment (61) disposed in said second connecting hole (34), and a tube-connecting segment (62) opposite to said connector-body connecting segment (61) along the second axis (L2), said second connector (6) being formed with a second guiding hole (64) extending along the second axis (L2) and in spatial communication with said end of said oil tube (731), said second guiding hole (64) extending through said tube-connecting segment (62) and said connector-body connecting segment (61) and being in fluid communication with said second connecting hole (34) and said hole openings (461) of said overflow hole (46), so that said second guiding hole (64), said oil-filled space (30) and said first guiding hole (45) cooperate with one another to define an oil passage (F) permitting the damping oil to flow therein.
said oil passage (F) being in fluid communication with said oil tube (731) and said shock absorber main body (71) to permit the damping oil to flow therebetween and to compress the gas in said reservoir (72) when the damping oil flows into said reservoir (72).

11. The shock absorber as claimed in Claim 10, **characterized in that** said second connecting hole (34) further includes an intermediate section (343) connected between said interior section (341) and said exterior section (342) and having a diameter larger than that of said interior section (341), said connector-body connecting segment (61) of said second connector (6) being disposed in said intermediate section (343) and said exterior section (342) of said second connecting hole (34).

12. The shock absorber as claimed in Claim 10 or 11, **characterized in that** said exterior section (342) of said second connecting hole (34) of said connector body (3) converges gradually toward said interior section (341) for guiding said second connector (6) to move into said connector body (3) during assembly of said second connector (6) to said connector body (3) .

13. The shock absorber as claimed in any one of Claims 10 to 12, **characterized in that** said connector-body connecting segment (61) of said second connector (6) is formed with an annular sealing groove (611) and an annular retainer groove (612) spaced apart from said sealing groove (611) along the second axis (L2), said connector body (3) having an inner surface (340) defining said second connecting hole (34) and formed with an annular retainer groove (347), said universal tube adaptor further comprising:
an O-ring (53) disposed in said sealing groove (611) and clamped between said connector-body connecting segment (61) of said second connector (6) and said connector body (3), so as to interconnect said second connector (6) and said connector body (3) in a fluid-tight manner; and
a C-shaped retaining ring (54) disposed in said retainer groove (612) of said connector-body connecting segment (61) of said second connector (6) and said retainer groove (347) of the connector body (3), so as to prevent relative movement between said second connector (6) and said connector body (3).

14. The shock absorber as claimed in any one of Claims 10 to 13, **characterized in that** said first connector (4) includes an insertion segment (41) being received in said first connecting hole (33), a fixing segment (42) extending outwardly from said first connecting hole (33), and a mounting segment (43) opposite to said fixing segment (42) along the first axis (L1), said open end (451) of said first guiding hole (45) being formed in said mounting segment (43), said overflow hole (46) being formed in said insertion segment (41), said universal tube adaptor further comprising a fastening member (52) for securing said fixing segment (42) of said first connector (4) to said connector body (3).

15. The shock absorber as claimed in Claim 14, **characterized in that** said large diameter section (331) of said first connecting hole (33) is larger in dimension along the first axis (L1) than a dimension of each of said hole openings (461) of said overflow hole (46) so as to permit the damping oil to flow smoothly in said oil passage (F), said first connector (4) further including a stop segment (44) that is disposed between said insertion segment (41) and said mounting segment (43), that has an outer diameter larger than those of said insertion segment (41) and said mounting segment (43), and that abuts against said connector body (3), said stop segment (44) cooperating with said fastening member (52) to clamp said connector body (3) therebetween so as to connect said first connector (4) fixedly to said connector body (3).
